# DEMANDE DE BREVET EUROPEEN

(11) **EP 1 577 698 A1**
(43) Date de publication de la demande: **21.09.2005**
(21) Numéro de dépôt: 05290545.2
(22) Date de dépôt: 11.03.2005
(51) Int. Cl.: G02C 1/08

(54) **Monture de lunettes à assemblage magnétique des verres**

(30) Priorité: 15.03.2004 FR 0402649
(71) Demandeur: Ayache, Charles, 75116 Paris (FR); Thut, Caroline, 75116 Paris (FR); Ayache, Antoine, 75116 Paris (FR); Ayache, Charlotte, 75116 Paris (FR); Ayache, Benjamin, 75116 Paris (FR)
(72) Inventeur: Ayache, Charles, 75116 Paris (FR)
(74) Mandataire: Nicolle, Olivier

(57) **Abrégé**

La monture de lunettes comporte, de part et d'autre d'un pont nasal, deux cercles (3) de monture destinés à recevoir chacun un verre, chaque cercle (3) étant ouvert à un endroit d'assemblage choisi, la monture comportant en outre des moyens d'assemblage (13, 21) de chaque cercle (3). Les moyens d'assemblage (13, 21) comportent un couple de plots magnétiques (18) complémentaires à accoler à l'endroit choisi dans une disposition face à face, les moyens d'assemblage (13, 21) étant adaptés à maintenir lesdits plots (18) dans cette disposition. Les moyens d'assemblage (13, 21) sont situés soit sur chaque cercle (3) à distance du pont nasal de façon à fermer chaque cercle (3) de façon indépendante soit au niveau du pont nasal de façon à fermer les deux cercles (3) conjointement.

## Description

L'invention concerne d'une manière générale les montures de lunettes.

Les montures connues présentent des moyens d'assemblage des verres à la monture qui rendent difficiles le désassemblage des verres. On connaît notamment des montures présentant de part et d'autre d'un pont nasal un cercle de verre pouvant être ouvert selon une discontinuité. Les deux extrémités du cercle sont assemblées l'une à l'autre en position jointive par une vis de fixation.

La vis n'est pas bloquée afin de conserver la possibilité de dévisser celle-ci pour pouvoir changer le verre. Ainsi, à l'usage, il arrive que celle-ci se dévisse. Par ailleurs, les opérations de vissage/dévissage sur des vis de petite dimension exigent un travail de précision qui ne peut pas être effectué par l'utilisateur.

Le but de l'invention est de fournir une monture de lunettes permettant de pallier les inconvénients susmentionnés tout en étant particulièrement simple et commode à fabriquer et à utiliser.

A cet effet, l'invention propose une monture de lunettes comportant, de part et d'autre d'un pont nasal, deux cercles de monture destinés à recevoir chacun un verre en position assemblée, chaque cercle étant ouvert à un endroit d'assemblage choisi, et des moyens d'assemblage de chaque cercle. Selon un aspect général de l'invention, les moyens d'assemblage comportent un couple de plots magnétiques complémentaires à accoler à l'endroit choisi dans une disposition face à face, les moyens d'assemblage étant adaptés à maintenir lesdits plots magnétiques dans cette disposition.

Ainsi, le désassemblage du verre est particulièrement simple puisqu'une simple traction suffit pour écarter un plot de l'autre. La fixation est néanmoins sûre puisque le plot ne peut être retiré que si la traction est exercée dans la direction imposée par les moyens d'assemblage.

Il est particulièrement intéressant d'utiliser pour les plots les matières nouvelles permettant d'obtenir des aimants légers et puissants tels que les alliages terres rares/métaux de transition comme par exemple, les alliages néodyme-fer-bore, cobalt-samarium, etc.

Selon des caractéristiques de mise en oeuvre particulièrement simples et commodes tant à la fabrication qu'à l'utilisation :
- selon un premier mode de réalisation, chaque cercle est ouvert selon une discontinuité située à distance choisie du pont nasal ; la distance choisie correspond sensiblement au diamètre du cercle; pour chaque discontinuité une première extrémité de cercle comporte un logement en saillie vers l'extérieur de la monture, un plot magnétique étant fixé dans le fond du logement ; et pour chaque discontinuité une seconde extrémité comporte un support en saillie auquel est fixé rigidement un second plot magnétique ; les plots présentent chacun une surface plane, chacune adaptée à venir en contact avec l'autre, le logement comportant une surface latérale adaptée à ce qu'en position jointive des extrémités le second plot soit logé au moins en partie dans le logement afin de bloquer le glissement des plots l'un par rapport à l'autre.
- selon un deuxième mode de réalisation, les deux cercles sont ouverts selon une discontinuité, ladite discontinuité étant une fente traversant le pont nasal d'un cercle à l'autre ; la fente est délimitée par deux plateaux comportant chacun un évidement formant logement pour un plot magnétique ; les plots présentent chacun une surface plane, chacune adaptée à venir en contact avec l'autre, les logements étant adaptés à ce qu'en position jointive des plateaux, l'un des plots est logé en partie dans chaque logement afin de bloquer le glissement des plots l'un par rapport à l'autre.

L'invention propose également un procédé de réalisation d'une monture telle que précédemment exposée, caractérisé en ce qu'il comporte les étapes consistant à se procurer des plots magnétiques, prévoir les moyens d'assemblage, fixer lesdits plots au niveau des moyens d'assemblage ; le procédé peut également comprendre les étapes suivantes : on moule la face frontale comportant la discontinuité et les deux logements, et on fixe chaque plot dans un logement respectif.

Les caractéristiques et avantages de l'invention ressortiront d'ailleurs de la description qui suit, donnée à titre d'exemple préféré, mais non limitatif, en référence aux dessins annexés, sur lesquels :
- la figure 1 est une vue en perspective d'une monture de lunettes selon l'invention ;
- la figure 2 est une vue en élévation d'une face frontale de la monture selon un premier mode de réalisation, chaque cercle présentant une discontinuité, une partie des moyens d'assemblage étant visible ;
- la figure 3 est une vue en perspective schématique du détail III de la figure 1 illustrant un premier mode de réalisation ;
- la figure 4 est une vue similaire à celle de la figure 3, le cercle étant ouvert à la discontinuité ;
- la figure 5 est une vue en coupe, prise selon un plan transversal à une branche déployée, du détail représenté sur la figure 3 ;
- la figure 6 est une vue de dessus d'une extrémité de cercle à laquelle se raccorde une branche, sur laquelle est visible un plot magnétique ;
- la figure 7 est une vue en perspective schématique du détail VII de la figure 1 illustrant un deuxième mode de réalisation ;
- la figure 8 est une vue similaire à celle de la figure 7, le cercle étant ouvert au niveau du pont nasal à la discontinuité, les plots magnétiques étant visibles ;

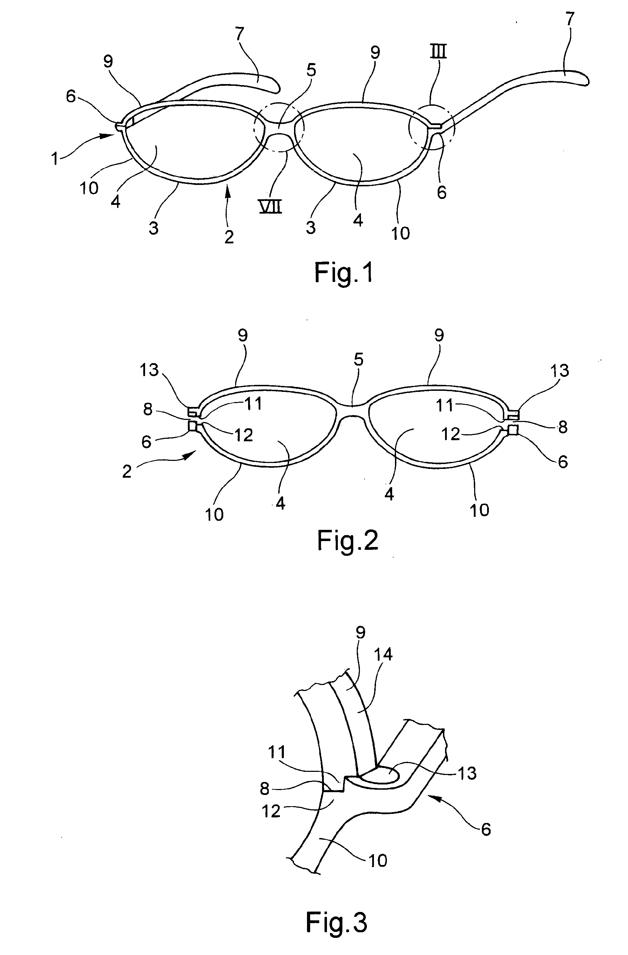

La monture de lunettes 1 illustrée sur la figure 1 présente une face frontale 2 comportant deux cercles 3. La monture 1 est ici en matière plastique rigide.

Chaque cercle 3 s'étend selon une ligne fermée et définit une ouverture 4. L'ouverture 4 est adaptée à être obstruée par un verre (non représenté). Le verre s'emboîte dans un drageoir ménagé sur le bord intérieur du cercle 3.

Les deux cercles 3 sont raccordés l'un à l'autre au moyen d'un pont nasal 5. Le pont nasal 5 est ici d'une pièce avec les deux cercles 3.

De chaque côté de la face frontale 2, chaque cercle 3 comporte un corps de charnière 6 s'étendant transversalement à la face frontale 2.

Chaque corps de charnière 6 présente des moyens d'articulation de la face frontale 2 avec une branche 7 de la monture 1. La branche 7 comporte une tige rectiligne qui se raccorde à une partie recourbée destinée à être placée sur l'oreille du porteur de lunettes.

Chaque branche 7 pivote entre deux positions extrêmes, une position déployée dans laquelle la branche 7 est transversale à la face frontale 2 et une position repliée dans laquelle la branche 7 est parallèle et le long de la face frontale 2.

Selon un premier mode de réalisation illustré sur les figures 2 à 6, chaque cercle 3 est ouvert à l'endroit du corps de charnière 6. Ce dernier comporte la discontinuité 8 divisant le cercle 3 en deux arcs de cercles 9, 10, partant chacun du pont nasal 5.

Au niveau de la discontinuité 8, le premier arc de cercle 9 comporte une première extrémité 11 du cercle 3 et le deuxième arc de cercle 10 comporte une deuxième extrémité 12.

Le cercle 3 est suffisamment souple pour que le premier arc de cercle 9 et le deuxième arc de cercle 10 puissent être écartés l'un de l'autre. L'ouverture 4 peut alors être agrandie. Une force de rappel s'exerce de sorte que lorsque l'on cesse d'écarter les arcs 9, 10 l'un de l'autre, les extrémités 11, 12 reviennent au contact l'une de l'autre.

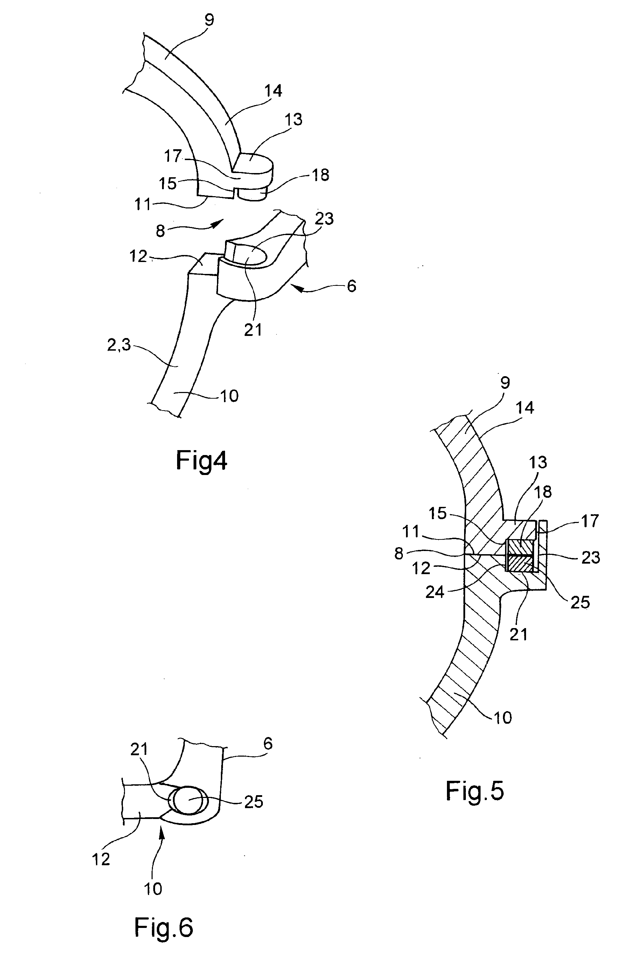

La première extrémité 11 (figure 4) comporte un support ou serre-cercle mâle 13 en forme d'oreille en saillie. Le serre-cercle 13 prend racine sur le bord extérieur 14 du cercle 3 et s'étend transversalement à ce bord. Le serre-cercle 13 est situé juste au dessus de l'extrémité 11 de sorte qu'il existe un épaulement 15 entre le serre-cercle 13 et l'extrémité 11.

Le serre-cercle 13 comporte une surface latérale 17 arrondie vers son extrémité la plus éloignée du bord extérieur 14.

Sous le serre-cercle 13, du côté de l'épaulement 15 est fixé un plot 18. Ce plot 18 est une pastille magnétique sensiblement de mêmes dimensions que le serre-cercle 13 et collée sous celui-ci. La hauteur de l'aimant 18 est comparable à celle de l'épaulement 15.

La deuxième extrémité 12 se raccorde au corps de charnière 6 qui prend racine sur le bord extérieur 14 du cercle 3. Le corps de charnière 6 est en porte à faux par rapport à l'extrémité 12.

A l'extrémité du corps 6 opposée à l'arc 10 se trouvent des moyens d'articulations avec une branche 7 de la monture 1. Du côté de l'extrémité adjacente à l'arc 10, le corps de charnière 6 comporte un évidement formant logement 21 notamment pour le serre-cercle mâle 13.

Le logement 21 a globalement la forme du serre-cercle 13 pourvu de l'aimant 18. Toutefois, le logement 21 est plus profond. Le logement 21 forme un serre-cercle femelle adapté à coopérer avec le serre-cercle mâle 13.

Le logement comporte une partie supérieure 23 arrondie et ouverte du côté du cercle 3.

Le logement 21 comporte une partie inférieure située sous le niveau de l'extrémité 12. Cette partie inférieure correspond à une cavité cylindrique 24 (figure 5).

Dans la cavité cylindrique 24 est collé un aimant 25 cylindrique. L'aimant 25 est similaire à l'aimant 18. Sa hauteur correspond à celle de la cavité 24.

L'aimant 25 affleure au niveau de l'extrémité 12. Les aimants 18, 25 comportent des surfaces planes adaptées à venir en contact l'une avec l'autre. Les aimants 18, 25 sont adaptés pour que leurs polarités soient complémentaires de sorte qu'une force d'attraction mutuelle s'exerce lorsque ceux-ci sont à proximité.

On décrit maintenant le montage et le démontage d'un verre de lunettes. Lorsque l'on souhaite emboîter le verre dans le cercle 3, on écarte les arcs de cercle 9, 10, et on positionne le verre sur les arcs de cercle 9, 10. Par une force de rappel élastique, les extrémités 11, 12 se rapprochent l'une de l'autre jusqu'au contact des surfaces planes des aimants 18, 25. L'aimant 18 et le serre-cercle mâle 13 sont alors emboîtés dans le logement 21. Les arcs de cercle 9, 10 sont réunis et le verre est maintenu.

Si l'on souhaite démonter le verre, on écarte les arcs 9, 10 avec une force axiale supérieure à la force d'attraction mutuelle entre les aimants 18, 25 pour agrandir l'ouverture 4 et libérer le verre.

La forme du logement 21 et notamment la partie supérieure 23 permettent de bloquer le mouvement de glissement des aimants 18, 25 l'un sur l'autre.

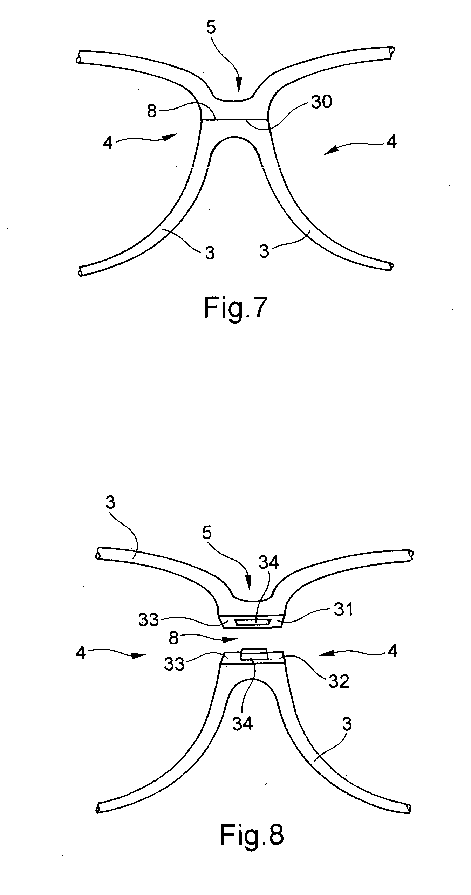

Selon un deuxième mode de réalisation (figures 7, 8), chaque cercle 3 présente une ouverture à l'endroit du pont nasal 5. Ce dernier présente une discontinuité 8 sous la forme d'une fente 30 qui s'étend d'une ouverture 4 à l'autre. La fente 30 s'étend sur toute l'épaisseur du pont nasal 5, de façon à définir deux plateaux 31, 32. Chaque plateau 31, 32 peut être écarté de l'autre.

Chaque plateau 31, 32 présente une surface rectangulaire. Au centre de chacune de ces surfaces se trouve un logement parallélépipédique 33.

Chaque logement 33 accueille un aimant 34 en forme de barreau.

Les dimensions des logements 33 sont adaptées à ce que l'un des aimants 34 dépasse de son logement d'une hauteur déterminée et l'autre aimant 34 est fixé dans le fond de son logement laissant un espace libre de hauteur équivalente.

En position jointive des aimants 34, l'aimant qui dépasse vient combler l'espace libre dans le logement opposé. Les deux aimants 34 sont placés de telle sorte qu'ils exercent l'un sur l'autre une force d'attraction.

Lorsque les verres sont montés dans les cercles 3, les aimants 34 sont l'un contre l'autre de sorte que les plateaux 31, 32 sont l'un contre l'autre. Dans cette position, les verres sont maintenus au moyen de la force de rappel d'un plateau vers l'autre et de la force d'attraction mutuelle des aimants et le glissement des aimants l'un par rapport à l'autre est rendu impossible par leur positionnement dans les logements 33.

Lors du montage ou du démontage d'un verre, on écarte les deux extrémités 31, 32 du pont nasal 5 dans la seule direction possible transversalement aux plateaux 31, 32 de sorte que les ouvertures 4 soient agrandies afin d'enlever ou placer les verres.

Cette face frontale 2 est ici réalisée par moulage et d'une pièce. La pièce démoulée comporte la fente 30 et les logements 33. Ensuite, on colle chaque barreau 34 dans un logement 33, chaque barreau 34 affleurant alors la fente 30.

De façon générale pour réaliser cette monture de lunettes, on se procure des plots magnétiques (18, 25, 34) et on prévoit les moyens d'assemblage (13, 21, 31, 32).

Puis, on fixe les plots (18, 25, 34) au niveau des moyens d'assemblage (13, 21, 31, 32). On fixe les plots ici par collage, toutefois, dans d'autres variantes, un ou les deux aimants sont sertis au cercle ou au pont nasal.

Dans une variante non représentée du premier mode de réalisation, la monture ne comporte pas de serre-cercle en saillie, les aimants sont par exemple insérés directement dans le cercle fendu selon une discontinuité ou encore fixés sur des serre-cercle situés derrière la face frontale.

Dans d'autres variantes non représentées, les aimants utilisés dans le premier mode de réalisation sont parallélépipédiques. Plus généralement, de nombreuses formes conviennent pour les aimants.

Concernant la forme particulière des corps de charnière, du premier mode réalisation, il peut être envisagé d'autres formes, notamment pour le logement et le serre-cercle mâle.

Dans encore d'autres variantes, la monture est en bois ou en métal ou le pont nasal est dans une matière différente de celle des cercles.

Selon une variante, le pont nasal est découpé.

Dans d'autres variantes, des moyens de verrouillage des arcs l'un par rapport à l'autre sont prévus pour bloquer tout éventuel mouvement des aimants l'un par rapport à l'autre.

La présente invention n'est pas limitée au mode de réalisation décrit et représenté mais englobe toute variante d'exécution.

## Revendications

1. Monture de lunettes comportant, de part et d'autre d'un pont nasal (5), deux cercles (3) de monture destinés à recevoir chacun un verre en position assemblée, chaque cercle (3) étant ouvert à un endroit d'assemblage choisi, et des moyens d'assemblage (13, 21, 31, 32) de chaque cercle (3), **caractérisée en ce que** les moyens d'assemblage (13, 21, 31, 32) comportent un couple de plots magnétiques (18, 25, 34) complémentaires à accoler à l'endroit d'assemblage choisi dans une disposition face à face, les moyens d'assemblage (13, 21, 31, 32) étant adaptés à maintenir lesdits plots magnétiques (18, 25, 34) dans cette disposition.

2. Monture selon la revendication 1, **caractérisée en ce que** chaque cercle (3) est ouvert selon une discontinuité (8) située à distance choisie du pont nasal (5).

3. Monture selon la revendication 2, **caractérisée en ce que** la distance choisie correspond sensiblement au diamètre du cercle (3).

4. Monture selon l'une des revendications 2 ou 3, **caractérisée en ce que**, pour chaque discontinuité (8), une première extrémité (12) de cercle comporte un logement (21) en saillie vers l'extérieur de la face frontale (2), un plot magnétique (18) étant fixé dans le fond du logement (21).

5. Monture selon la revendication 4, **caractérisée en ce que**, pour chaque discontinuité (8), une seconde extrémité (11) comporte un support (13) en saillie auquel est fixée rigidement un second plot magnétique (25).

6. Monture selon la revendication 5, **caractérisée en ce que** les plots magnétiques (18, 25) sont collés respectivement au support (13) et dans le fond du logement (21).

7. Monture selon l'une des revendications 5 ou 6, **caractérisée en ce que** les plots (18, 25) présentent chacun une surface plane, chacune adaptée à venir en contact avec l'autre, le logement (21) comportant une surface latérale (23) adaptée à ce qu'en position jointive des extrémités (11, 12) le second plot (25) soit logé au moins en partie dans le logement (21) afin de bloquer le glissement des plots (18, 25) l'un par rapport à l'autre.

8. Monture selon l'une des revendications 5 à 7, **caractérisée en ce que** le support (13) est emboîtable dans le logement (21).

9. Monture selon l'une des revendications 1 à 8, **caractérisée en ce que** chaque plot magnétique (18, 25) est une pastille.

10. Monture selon la revendication 1, **caractérisée en ce que** les deux cercles (3) sont ouverts selon une discontinuité (8), ladite discontinuité (8) étant une fente (30) traversant le pont nasal (5) d'un cercle (3) à l'autre.

11. Monture selon la revendication 10, **caractérisée en ce que** la fente (30) est délimitée par deux plateaux (31, 32) comportant chacun un évidement formant logement (33) pour un plot magnétique (34).

12. Monture selon la revendication 11, **caractérisée en ce que** les plots (34) présentent chacun une surface plane, chacune adaptée à venir en contact avec l'autre, les logements (33) étant adaptés à ce qu'en position jointive des plateaux (31, 32), l'un des plots est logé en partie dans chaque logement (33) afin de bloquer le glissement des plots (18, 25) l'un par rapport à l'autre.

13. Monture selon l'une des revendications 11 à 12, **caractérisée en ce que** chaque plot (34) est un barreau.

14. Monture selon l'une des revendications précédentes, **caractérisée en ce que** les plots magnétiques sont en alliage terres rares/métaux de transition.

15. Procédé de réalisation d'une monture de lunettes comportant, de part et d'autre d'un pont nasal (5), deux cercles (3) de monture destinés à recevoir chacun un verre en position assemblée, chaque cercle (3) étant ouvert à un endroit d'assemblage choisi, et des moyens d'assemblage (13, 21, 31, 32) de chaque cercle (3), **caractérisé en ce qu'**il comporte les étapes consistant à se procurer des plots magnétiques (18, 25, 34), prévoir les moyens d'assemblage (13, 21, 31, 32), fixer lesdits plots (18, 25, 34) au niveau des moyens d'assemblage (13, 21, 31, 32).

16. Procédé de réalisation d'une monture selon la revendication 15, ladite monture comportant une face frontale (2), les deux cercles (3) étant ouverts selon une discontinuité (8), ladite discontinuité (8) étant une fente (30) traversant le pont nasal (5) d'un cercle (3) à l'autre, la fente (30) étant délimitée par deux plateaux (31, 32) comportant chacun un évidement formant logement (33) pour un plot magnétique (34), **caractérisé en ce qu'**il comporte l'étape consistant à mouler la face frontale (2) comportant la discontinuité (8) et les deux logements (33).
